# EUROPÄISCHE PATENTSCHRIFT

(11) **EP 3 918 168 B1**
(45) Veröffentlichungstag und Bekanntmachung des Hinweises auf die Patenterteilung: **11.01.2023**
(21) Anmeldenummer: 20705135.0
(22) Anmeldetag: 27.01.2020
(51) Int. Cl.: E05F 15/603, H02K 21/22, H02K 7/116, H02K 7/14

(54) **MÖBELKOMPONENTE MIT EINEM ANTREIBBAREN MÖBELBESCHLAG**
FURNITURE COMPONENT COMPRISING A DRIVABLE FURNITURE FITTING
COMPOSANT DE MEUBLE DOTÉ D'UNE FERRURE POUR MEUBLE POUVANT ÊTRE ACTIONNÉE

(30) Priorität: 28.01.2019 DE 102019102057
(43) Veröffentlichungstag der Anmeldung: 08.12.2021
(73) Patentinhaber: ambigence GmbH & Co. KG, 32052 Herford (DE)
(72) Erfinder: ANDSCHUS, Stefan, 32312 Lübbecke (DE); SOBOLEWSKI, Uwe, 32257 Bünde (DE)
(74) Vertreter: BSB Patentanwälte Schütte & Engelen Partnerschaft mbB
(86) Internationale Anmeldenummer: PCT/EP2020/051893
(87) Internationale Veröffentlichungsnummer: WO 2020/156985

(56) Entgegenhaltungen:
- DE-U1-202009 015 640
- DE-U1-202014 104 749

## Beschreibung

Die vorliegende Erfindung betrifft eine Möbelkomponente mit einem antreibbaren Möbelbeschlag und mit einem elektrischen Motor zur beweglichen Verbindung zweier Möbelteile, wobei der Möbelbeschlag an einem ersten Möbelteil anordenbar oder befestigbar ist und dafür vorgesehen ist, mit dem Motor das Möbelteil anzutreiben, um eine motorunterstützte Bewegung eines Möbelteils relativ zu dem anderen Möbelteil zu erzeugen, wobei der Motor einen zentralen Stator mit bestrombaren Spulen und einen den Stator umgebenden Rotor umfasst, und dass der Rotor das Getriebe antreibt.

Im Stand der Technik sind verschiedene Möbel bekannt geworden, bei denen gegebenenfalls auch ein Teil durch einen elektrischen Motor bewegt werden kann.

So zeigt die WO 2009/114883 A2 einen Möbelantrieb zum Antreiben eines bewegbaren Möbelteils mit einem Elektromotor zwischen zwei Endanschlägen. Grundsätzlich funktioniert ein solcher Möbelantrieb und erlaubt das motorisch gesteuerte Öffnen und Schließen eines bewegbaren Möbelteils. Nachteilig ist aber der nicht unerhebliche Platzbedarf, da dem Elektromotor ein Getriebe mit mehreren Getriebestufen nachgeordnet ist, um die hohe Drehzahl eines solchen Elektromotors auf ein im Möbelbereich zum Öffnen und Schließen vernünftiges Geschwindigkeitsmaß herabzusetzen.

Ein weiterer Nachteil ist bei derartigen Konstruktionen meist ein relativ unangenehmes Geräusch, welches durch die hohe Drehzahl des Elektromotors erzeugt wird. Insgesamt ist deshalb ein derartiger Möbelantrieb aufgrund der vielen verschiedenen Komponenten aufwendig und somit teuer und reduziert beispielsweise im Innenraum eines Oberschrankes den zur Verfügung stehenden Platz nicht unbeträchtlich. Schließlich stört gegebenenfalls auch das erzeugte Geräusch, welches nur durch eine relativ aufwendige Dämmung oder teure Komponenten reduzierbar ist.

DE 20 2009 015640 U1 offenbart eine Möbelkomponente mit einem antreibbaren Möbelbeschlag zur beweglichen Verbindung zweier Möbelteile und einem elektrischen Motor, wobei der Möbelbeschlag an einem ersten Möbelteil der beiden Möbelteile anordenbar ist und dafür vorgesehen ist, mit dem Motor über ein Getriebe das zweite Möbelteil anzutreiben, um eine motorunterstützte Bewegung des zweiten Möbelteils relativ zu dem ersten Möbelteil wenigstens abschnittsweise zwischen wenigstens einer ersten Stellung und wenigstens einer zweiten Stellung zu erzeugen, wobei der Motor einen zentralen Stator mit bestrombaren Spulen und einen den Stator umgebenden Rotor umfasst, und wobei der Rotor das Getriebe antreibt.

DE 20 2014 104749 U1 offenbart eine Kühlschrankkomponente mit einer ähnlichen Konstruktion.

Es ist deshalb die Aufgabe der vorliegenden Erfindung, eine Möbelkomponente mit einem antreibbaren Möbelbeschlag zur beweglichen Verbindung zweier Möbel zur Verfügung zu stellen, welche einen geringeren Bauraum benötigt.

Diese Aufgabe wird durch eine Möbelkomponente mit einem antreibbaren Möbelbeschlag zur beweglichen Verbindung zweier Möbelteile mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Möbelkomponente weist wenigstens einen antreibbaren Möbelbeschlag zur beweglichen Verbindung zweier Möbelteile und einen elektrischen und insbesondere elektromechanischen Motor auf, wobei der Möbelbeschlag an einem ersten Möbelteil der beiden Möbelteile anordnenbar und insbesondere befestigbar ist. Der Möbelbeschlag ist dafür vorgesehen, mit dem Motor über ein Getriebeteil das zweite Möbelteil anzutreiben, um eine motorunterstützte Bewegung des zweiten Möbelteils relativ zu dem ersten Möbelteil wenigstens abschnittsweise zwischen wenigstens einer ersten Stellung und wenigstens einer zweiten Stellung zu erzeugen. Der Motor umfasst einen zentralen Stator mit bestrombaren Spulen und einen den Stator umgebenden Rotor. Der Rotor treibt das Getriebe insbesondere zentral an. Der Motor und das Getriebe bilden eine (insbesondere flache und) wenigstens im Wesentlichen scheibenförmige Antriebsanordnung. Das Antriebsmoment wird an ein den Rotor innerhalb der scheibenförmigen Antriebsanordnung umgebendes Getriebeteil abgegeben, mittels dessen Bewegung das zweite Möbelteil antreibbar ist.

Die erfindungsgemäße Möbelkomponente hat viele Vorteile. Ein erheblicher Vorteil der erfindungsgemäßen Möbelkomponente besteht darin, dass der Motor einen zentralen Stator und einen den Stator umgebenden Rotor umfasst und insofern als Außenläufer ausgebildet ist. Der Motor und das Getriebe bilden eine scheibenförmige Antriebsanordnung, die nur wenig Bauraum benötigt. Dadurch, dass der Rotor sich um den Stator dreht, kann aufgrund des größeren Radius ein höheres Drehmoment erzeugt werden, wodurch die Drehzahl gesenkt werden kann. Dadurch müssen nicht so viele Getriebestufen eingesetzt werden, wie im Stand der Technik. Außerdem werden durch die geringere Drehzahl des Motors weniger Geräusche und insbesondere weniger hochfrequente Geräusche erzeugt, was angenehmer ist. Ein weiterer erheblicher Vorteil ist, dass der Motor ein Außenläufer ist und ein direkter Antrieb des Getriebes von dem Außenläufer aus erfolgen kann. Es muss keine Umlenkung der Drehbewegung des Antriebs von einer zentralen Motorachse nach außen erfolgen. Dadurch ist eine flachere und somit Raum sparende Bauweise möglich.

Ein weiterer Vorteil ist der geringere Platzbedarf, da ein flacher Aufbau erzielbar ist. Wird eine solche Antriebsanordnung beispielsweise an einer Innenwand eines Oberschrankes montiert, so ist der erforderliche Raumbedarf besonders gering. Besonders störend ist bei solchen Möbelkomponenten nämlich die Ausdehnung einer Antriebsanordnung senkrecht zu der Wand, da dadurch besonders viel Stauraum verloren geht. Die scheibenförmige Antriebsanordnung nimmt hingegen besonders wenig Bauraum ein.

Besonders bevorzugt ist der Motor im Wesentlichen oder vollständig innerhalb der scheibenförmigen Antriebsanordnung aufgenommen. Vorzugsweise wird der Motor als elektrischer bürstenloser Motor ausgebildet. An dem Rotor sind insbesondere Magnetelemente vorgesehen. Die Magnetelemente sind insbesondere als Permanentmagnete ausgeführt.

Die Relativbewegung des zweiten Möbelteils relativ zu dem ersten Möbelteil ist vorzugsweise eine horizontale translatorische und/oder horizontale rotatorische Bewegung oder eine vertikale translatorische und rotatorische oder vertikale rotatorische Bewegung.

In besonders bevorzugten Weiterbildungen ist das erste Möbelteil als Wand ausgebildet. Unter dem Begriff "Wand" wird im Sinne der vorliegenden Anmeldung vorzugsweise eine Möbelwand verstanden. Vorzugsweise weist die Wand erheblich größere oder großflächige Seitenflächen und erheblich kleinere oder schmalflächige Stirnseiten auf. Insbesondere ist die Rotationsachse (insbesondere der Bewegung des Motors) quer und vorzugsweise orthogonal zu wenigstens einer der Seitenflächen angeordnet. Die Drehachse des Motors kann quer und besonders bevorzugt senkrecht oder wenigstens etwa senkrecht bzw. orthogonal zur Oberfläche des ersten Möbelteils ausgerichtet sein.

Eine maximale Abmessung (insbesondere Tiefe oder Höhe) einer Seitenfläche einer Wand ist besonders bevorzugt (sehr viel) größer als eine Dicke der Wand (Abmessung der Stirnseite der Wand). Insbesondere ist ein Verhältnis einer maximalen Abmessung (insbesondere maximale Tiefe und/oder maximale Höhe) einer Seitenfläche der Wand zu einer Dicke der Wand größer als fünf oder zehn oder zwanzig oder noch (erheblich) mehr. Vorzugsweise ist eine Dicke der Wand (Seitenwand) kleiner als 35 mm oder 30 mm und vorzugsweise kleiner 25 mm. Besonders bevorzugt liegt die Dicke der Wand zwischen 12 mm und 24 mm und besonders bevorzugt zwischen 16 mm und 20 mm.

Bevorzugt ist eine axiale Breite des Motors und besonders bevorzugt der Antriebsanordnung kleiner als die zweifache und besonders bevorzugt 1,5fache Wandstärke der Wand bzw. der Möbelwand. In besonders bevorzugten Ausgestaltungen ist eine axiale Breite des Motors und insbesondere der Antriebsanordnung kleiner als die 0,9fache und besonders bevorzugt 0,5fache Wandstärke der Wand bzw. der Möbelwand.

In vorteilhaften Ausgestaltungen ist der Möbelbeschlag wenigstens teilweise oder im Wesentlichen vollständig oder vollständig in wenigstens einer Stellung in einem Aufnahmeraum in dem ersten (oder dem zweiten) Möbelteil aufgenommen. Beispielsweise kann der Möbelbeschlag in wenigstens einer Stellung vollständig innerhalb einer Wand der Möbelkomponente aufgenommen sein. Es ist möglich und bevorzugt, dass der Möbelbeschlag zumindest teilweise innerhalb des ersten (oder des zweiten) Möbelteils integriert ist.

Es ist möglich, dass der Motor und/oder der Möbelbeschlag in dem bewegbaren Möbelteil aufgenommen ist oder auch sichtbar daran befestigt ist.

In allen Ausgestaltungen ist das zweite Möbelteil vorzugsweise als Klappe, Deckel, Tür oder Schubkasten oder dergleichen ausgebildet. Unter einer "Tür" im Sinne der vorliegenden Erfindung wird auch eine Drehtür, Falttür oder Schiebetür verstanden.

Es ist bevorzugt, dass das zweite Möbelteil in wenigstens einer Stellung einen Stauraum wenigstens teilweise abdeckt. Insbesondere ist der Möbelkomponente wenigstens ein Stauraum zugeordnet. Möglich ist es auch, dass der Möbelkomponente zwei oder mehr Stauräume zugeordnet sind oder dass die Möbelkomponente einen Stauraum oder zwei oder mehr Stauräume aufweist. In bevorzugten Ausgestaltungen dient eine Bewegung des zweiten Möbelteils zum Öffnen und/oder Verschließen des Stauraumes. In einer einfachen Ausgestaltung kann das zweite Möbelteil beispielsweise ein schwenkbares Möbelteil wie eine Tür sein.

Es ist besonders bevorzugt, dass ein Verhältnis von einem maximalen und/oder minimalen Durchmesser der Antriebsanordnung und/oder des Rotors und/oder des den Rotor umgebenden Getriebeteils und/oder des Getriebes zu einer axialen Breite der scheibenförmigen Antriebsanordnung und/oder des Motors größer als 3:1 oder größer als 5:1 oder größer 6:1 oder größer 7:1 beträgt. Das wird vorzugsweise unter einer "flach" oder "flach bauenden" Antriebsanordnung verstanden.

Vorzugsweise beträgt eine axiale Breite der scheibenförmigen Antriebsanordnung weniger als 30 mm oder 25 mm oder weniger als 16 mm und kann weniger als 14 mm betragen. In einer bevorzugten Ausgestaltung liegt eine axiale Breite der scheibenförmigen Antriebsanordnung zwischen 6 mm und 15 mm und kann beispielsweise 12 mm betragen. Insbesondere axiale Breiten von weniger als 18 mm oder weniger als 16 mm oder weniger als 14 mm sind sehr vorteilhaft, da damit auch die Integration der Antriebsanordnung in einer typische Wand eines Möbels möglich wird. Das ist besonders vorteilhaft, da der Möbelbeschlag und/oder die Antriebsanordnung damit praktisch vollständig verschwinden kann.

In bevorzugten Ausgestaltungen ist ein maximaler Außendurchmesser der Antriebsanordnung und/oder des Rotors und/oder des Motors größer 50 mm und insbesondere größer 60 mm und vorzugsweise größer 75 mm. Möglich bevorzugt sind auch Durchmesser von mehr als 80 mm, 90 mm oder 100 mm. In bevorzugten Ausgestaltungen weist die Antriebsanordnung einen Außendurchmesser auf, der kleiner ist als 400 mm und insbesondere kleiner ist als 300 mm und vorzugsweise kleiner 200 mm oder 150 mm ist.

In vielen Ausgestaltungen beträgt ein mittlerer oder minimaler Außendurchmesser der Antriebsanordnung zwischen 75 mm und 150 mm.

In allen Ausgestaltungen ist es möglich, dass das Getriebe der Antriebsanordnung als Wellgetriebe, Zykloidgetriebe oder Planetengetriebe ausgebildet ist oder wenigstens ein solches umfasst. Denkbar ist es auch, dass die Antriebsanordnung zwei Getriebestufen oder Getriebe umfasst.

Unter Zykloidgetriebe sind in diesem Zusammenhang insbesondere Exzentergetriebe zu verstehen, die mindestens ein Bauteil besitzen, welches exzentrische Rotationen durchführt. Meist besitzt dieses Bauteile wenigstens eine Zykloide als Verzahnung, es ist auch möglich, Evolventenverzahnungen zu verwenden.

Möglich und bevorzugt ist auch der Einsatz von Acbar-Getrieben (auch Akbar-Getriebe genannt), die eine hohe Übersetzung ermöglichen. Acbar-Getriebe werden meist mit vier Zahnrädern ausgerüstet. Bei solchen Acbar-Getrieben (und auch bei anderen Exzentergetrieben) mit geringen Unterschieden der Zähnezahlen tragen immer mehrere Zähne der Verzahnung, wodurch eine sehr hohes Verhältnis von Belastbarkeit zu dem umbauten Raum besteht, was sehr vorteilhaft ist.

Möglich ist auch der Einsatz von Wolfromgetrieben, bei denen meist mindestens zwei Innen- und Planetenräder erforderlich sind.

Vorzugsweise treibt der Rotor wenigstens eine unrunde Außenkontur an. Es ist möglich, dass an dem Rotor eine unrunde Außenkontur ausgebildet ist. Die unrunde Außenkontur kann einstückig an dem Rotor ausgebildet sein. Es ist auch möglich, dass die unrunde Außenkontur ein separates Teil ist und insbesondere drehfest mit dem Rotor verbunden ist.

Insbesondere ist an der unrunden Außenkontur wenigstens eine Anlagestelle vorgesehen bzw. ausgebildet. Möglich ist es auch, dass zwei oder drei oder mehr Anlagestellen vorgesehen sind. An wenigstens einer Anlagestelle drückt vorzugsweise eine Übertragungseinheit von innen gegen ein flexibles Zahnringelement mit Außenverzahnung. Das Zahnringelement dient als Getriebeteil. Das flexible Zahnringelement greift in eine Innenverzahnung wenigstens eines Außenrings ein. Bei der Drehung des Rotors rotiert die unrunde Außenkontur mit.

Es ist möglich, dass keine direkte Kopplung zwischen Stator und Zahnringelement besteht. Vorzugsweise ist das flexible Zahnringelement drehfest zum Stator ausgebildet und/oder angeordnet. In bevorzugten Ausgestaltungen besteht keine direkte Kopplung zwischen dem Stator und dem Zahnringelement. Eine (im Wesentlichen) drehfeste Lage kann durch den Zahneingriff und die Wellenbewegung des Zahnringelementes entstehen.

Möglich ist es auch, dass das Zahnringelement mit dem Rotor formschlüssig oder kraftschlüssig verbunden wird.

Bei der Drehung des Rotors drückt die Anlegestelle jedenfalls gegen das flexible Zahnringelement und verformt es lokal und reversibel.

Es ist möglich, dass zwei oder drei oder mehr Anlagestellen an dem Rotor ausgebildet sind. Bevorzugt ist eine Anzahl von ein oder zwei oder gegebenenfalls drei Anlagestellen. Die Anzahl der Anlagestellen hängt auch vom Durchmesser des Rotors ab.

Die unrunde Außenkontur kann beispielsweise eine Ellipsenform oder eine Eiform aufweisen.

Es ist möglich und bevorzugt, dass die Übertragungseinheit wenigstens ein drehbares Übertragungselement umfasst. Insbesondere kann ein drehbares Übertragungselement als drehbar gelagerte Übertragungsrolle oder Walze oder Kugel (Unrundkugellager) ausgebildet sein. Möglich ist es auch, dass die Übertragungseinheit ein Gleitteil ist, welches gleitend auf dem Innenumfang des flexiblen Zahnringelements läuft.

In allen Ausgestaltungen ist es bevorzugt, dass das flexible Zahnringelement drehfest mit dem Stator gekoppelt und/oder verbunden ist. Das flexible Zahnringelement kann an dem Stator formschlüssig oder kraftschlüssig befestigt oder daran angeklemmt sein.

Vorzugsweise ist die Übertragungseinheit oder wenigstens eine Übertragungseinheit durch eine Vorbelastungseinrichtung insbesondere radial nach außen zur Einwirkung auf das flexible Zahnringelement an der Anlagestelle vorbelastet. Die Kraft der Vorbelastungseinrichtungen kann einstellbar sein. Ein Vorteil einer derartigen Vorbelastungseinrichtung ist, dass sie als Überlastschutz verwendet werden kann. Außerdem wird darüber eine ausreichende - aber nicht zu große - Betätigungskraft bzw. Einwirkkraft auf das flexible Zahnringelement sichergestellt.

Es ist möglich, dass beispielsweise ein drehbares Übertragungselement mit einer Feder nach außen vorbelastet wird. Die Feder kann beispielsweise als Spiralfeder, Tellerfeder, Magnetfeder oder sonstige Feder ausgebildet sein. Beispielsweise kann auch ein elastischer Körper oder ein elastisches Element verwendet werden. Durch die Übertragungseinheit wird ein lokal begrenzter Eingriff der Außenverzahnung des flexiblen Zahnringelements mit einer Innenverzahnung eines Außenrings bewirkt.

Das Vorbelastungselement kann aus einer Formgedächtnislegierung bestehen was auch bei einer thermischen Überbelastung des Motors ein Freilaufen des flexiblen Zahnringelementes bewirkt und so als Überlastschutz für den Motor dient.

In besonders bevorzugten Ausgestaltungen sind wenigstens zwei und vorzugsweise (eng) benachbarte Außenringe umfasst, die jeweils eine Innenverzahnung aufweisen. Insbesondere ist einer der beiden Außenringe (wenigstens im Ergebnis) feststehend und der andere Außenring drehbar aufgenommen. Dabei weist die Innenverzahnung des drehbaren Außenrings eine andere Zähnezahl auf als die Innenverzahnung des feststehenden Außenrings. Insbesondere weist die Innenverzahnung des drehbaren Außenrings eine größere Zähnezahl auf als die Innenverzahnung des feststehenden Außenrings.

Vorzugsweise ist die Zähnezahl der Außenverzahnung des flexiblen Zahnringelements anders und insbesondere kleiner als die Zähnezahl der Innenverzahnung des drehbaren Außenrings.

Werden zwei benachbarte Außenringe mit Innenverzahnung und jeweils unterschiedlicher Zähnezahl eingesetzt, in die jeweils lokal begrenzt von innen eine Außenverzahnung eines flexiblen Zahnringelements eingreift, so wird bei der Drehbewegung des Motors an der Anlagestelle eine Synchronisierung der Position der beiden Außenringe bewirkt. Das bedeutet, dass bei der Drehbewegung der drehbare Außenring praktisch nachgezogen wird. Insgesamt ergibt die Konstruktion ein Getriebe mit einer hohen Untersetzung von 1:40 oder 1:60 oder mehr. Der Motor dreht sich erheblicher schneller als der Abtrieb bzw. das Getriebeteil der Antriebsanordnung. Das Übersetzungsverhältnis ist klein und insbesondere kleiner 1:40 oder kleiner 1:60.

Vorzugsweise ist die Zähnezahl der Außenverzahnung des flexiblen Zahnringelements gleich der Zähnezahl der Innenverzahnung des feststehenden Außenrings. Der flexible Zahnring und die beiden Außenringe weisen jedenfalls teilweise eine unterschiedliche Zähnezahl auf. Die jeweilige Zähnezahl ist aufeinander abgestimmt. Insbesondere weisen zwei Verzahnungen die gleiche Zähnezahl und eine Verzahnung eine sich um ein, zwei oder drei (oder mehr) Zähne unterscheidende Zähnezahl auf.

Es ist möglich und bevorzugt, dass sich die Zähnezahlen der zwei benachbarten Außenringe um die Zahl der Anlagestellen an dem flexiblen Zahnringelement unterscheidet.

Vorzugsweise weist der drehbare Außenring eine äußere Antriebskomponente auf. Insbesondere kann die äußere Antriebskomponente als Außenverzahnung ausgebildet sein, wodurch über die Außenverzahnung die Drehbewegung des drehbaren Außenrings auf weitere Teile übertragbar ist. Möglich ist es auch, dass der Außenring die Form eines Exzenters aufweist, oder dass außen eine Wickelvorrichtung, eine Hebelanordnung oder Ähnliches vorgesehen oder ausgebildet ist. Über die äußere Antriebskomponente ist der drehbare Außenring mit dem bewegbaren Möbelteil gekoppelt und treibt darüber den Möbelbeschlag an. Die Kopplung kann beispielsweise über eine Zahnstange, einen Zahnriemen, einen Gelenkarm oder dergleichen erfolgen.

Der drehbare Außenring kann auch zweiteilig ausgeführt werden. Die Teile können aus unterschiedlichen Materialien gefertigt sein und sich bei der Innenverzahnung, der Außenverzahnung und den eingesetzten Materialien (Metall, Kunststoff) unterscheiden.

In allen Ausgestaltungen ist es bevorzugt, dass das Getriebe ein Untersetzungsverhältnis kleiner 1:20 oder kleiner 1:40 aufweist. Möglich und bevorzugt sind auch Untersetzungen kleiner 1:50, 1:70 oder 1:80 oder auch kleiner als 1:160. Dadurch wird die Drehzahl des elektrischen Motors innerhalb von einer einzigen Getriebestufe (meist) ausreichend stark reduziert.

In vorteilhaften Weiterbildungen ist wenigstens ein Sensor umfasst. Wenigstens ein Sensor kann zur Erfassung und/oder Abschätzung wenigstens einer Position des zweiten Möbelteils und/oder des Motors eingesetzt werden. Als wenigstens ein Sensor wird insbesondere ein digitaler und/oder analoger Sensor eingesetzt. Es ist möglich, dass wenigstens ein Sensor in dem Motor integriert ist. Beispielsweise kann ein Drehwinkelgeber in dem Motor integriert sein. Möglich ist auch ein sensorloses System oder ein System, bei dem zum Beispiel wenigstens eine Spule (oder mehrere Spulen) z.B. (auch wenigstens zeitweise) für Messzwecke eingesetzt werden. Beispielsweise im Stillstand oder auch während der Bewegung.

In allen Ausgestaltungen ist es bevorzugt, dass eine Steuerung an der Möbelkomponente vorgesehen ist oder der Möbelkomponente zugeordnet ist. Die Steuerung ist insbesondere an dem oder innerhalb des Möbelbeschlags aufgenommen.

Vorzugsweise ist ein Sensor so mit der Steuerung gekoppelt, dass das testweise Anfahren des Motors in beide Richtungen, um die Position des Motors und die davon abhängige richtige Bestromung der Spulen herauszufinden, vermieden wird.

Es ist bevorzugt, dass wenigstens ein Endlagensensor vorgesehen ist. Ein solcher Endlagensensor kann beispielsweise als mechanischer Schalter oder als berührungsloser Sensor ausgebildet sein. Möglich ist es auch, dass eine Endlage beispielsweise über den Strombedarf des Motors ermittelt wird. Zusätzlich kann auch die Antriebszeit noch eingestellt werden, um eine Position abzuschätzen.

Vorzugsweise ist der Möbelbeschlag und/oder der Motor über wenigstens einen Abschnitt einer Bewegung zwischen einer ersten Stellung und einer zweiten Stellung mit dem zweiten Möbelteil gekoppelt. Dann ist es beispielsweise möglich, dass das zweite Möbelteil aus der geschlossenen Stellung ein wenig geöffnet wird, sodass der Benutzer es ergreifen und in die gewünschte Position bewegen kann.

Es ist auch möglich und bevorzugt, dass der Möbelbeschlag und/oder der Motor kontinuierlich bei einer Bewegung zwischen der ersten Stellung und der zweiten Stellung mit dem zweiten Möbelteil gekoppelt ist. Dadurch ist eine vollautomatische Öffnung und/oder Schließung über den Motor gesteuert möglich. Durch die nicht wechselnde Drehrichtung des Motors werden auch Umschaltgeräusche in den Verzahnungselementen vermieden.

In allen Ausgestaltungen und Weiterbildungen ist es bevorzugt, dass das erste Möbelteil den Möbelbeschlag von wenigstens vier oder wenigstens fünf Seiten wenigstens teilweise oder vollständig umfasst. Möglich ist es weiterhin, dass das erste Möbelteil den Möbelbeschlag insbesondere von wenigstens einer weiteren Seite oder zwei weiteren Seiten teilweise umfasst.

Ist das erste Möbelteil beispielsweise als Wand ausgebildet, so kann der Möbelbeschlag in der Wand wenigstens im Wesentlichen oder vollständig in wenigstens einer Stellung aufgenommen sein. Dann ist es möglich, dass der Möbelbeschlag an wenigstens zwei Stirnseiten der Wand vollständig von der Wand umgeben ist. Der Möbelbeschlag kann auf einer oder zwei Stirnseiten nur teilweise von der Wand umgeben sein. Vorzugsweise umgibt das erste Möbelteil bzw. die Wand den Möbelbeschlag seitlich vollständig.

Derartige Ausgestaltungen ermöglichen einen sehr kompakten Aufbau, bei dem praktisch überhaupt kein Stauraum verloren geht. Der Möbelbeschlag inklusive des Motors kann praktisch vollständig innerhalb der Wand verschwinden. Dadurch steht der maximal mögliche Stauraum an der Möbelkomponente zur Verfügung. Außerdem lassen sich durch diese Anordnung problemlos unterschiedliche Innenorganisationselemente in ein Möbelteil integrieren.

In allen Ausgestaltungen ist es bevorzugt, dass zumindest der elektrisch angetriebene Teil des Möbelbeschlags von einem Gehäuse insbesondere aus Metall oder einem flammhemmenden Material geschützt und/oder wenigstens teilweise umgeben ist. Das erste Möbelteil kann in allen Ausgestaltungen wenigstens zu einem erheblichen Teil oder nahezu vollständig oder vollständig aus Holz, Kunststoff und/oder Holzspanwerkstoffen bestehen.

Vorzugsweise wird der Motor mit Gleichspannung betrieben. Vorzugsweise ist die Gleichspannung kleiner gleich 120 V oder kleiner gleich 75 V oder kleiner gleich 60 V.

Insbesondere sind an dem Stator mindestens drei Phasen (Stromphasen) angeordnet und vorzugsweise über separate Kabel angeschlossen. Mehr Phasen erlauben einen ruhigeren Lauf. Vorzugsweise sind an dem Stator mindestens 5 Spulen und vorzugsweise wenigstens 10 Spulen und insbesondere auch mehr als 15 Spulen angeordnet. Möglich ist auch eine Konstruktion, bei der auf dem Umfang verteilt mehr als 6, 8, 10, 12, 16 oder mehr als 20 Spulen eingesetzt werden. Besonders bevorzugt ist die Anzahl der insbesondere als Permanentmagneten ausgebildeten Magnetelemente an dem Rotor genauso groß wie die Anzahl der eingesetzten Spulen oder entspricht einem ganzzahligen Vielfachen.

Vorzugsweise beinhaltet wenigstens einer der Permanentmagneten ein Seltenerdmetall.

In allen Ausgestaltungen ist es bevorzugt, dass wenigstens zwei Motoren und/oder Getriebeanordnungen umfasst sind. Vorzugsweise sind wenigstens zwei Motoren miteinander synchronisiert. Z. B. kann ein bewegbares Möbelteil mit mindestens zwei Motoren und Getriebeanordnungen angetrieben werden. Eine Synchronisierung ist dann oft vorteilhaft, z. B. wenn eine linke und rechte Seite eines Korpus (und ein mittlerer Bereich) angetrieben wird. Eine Synchronisierung ist vorteilhaft, um z. B. eine Schieflage einer Blende zu vermeiden. Eine Synchronisierung ist auch vorteilhaft, um eine optisch ansprechende gleichzeitige Bewegung verschiedener Teile zu erreichen.

Vorzugsweise umfasst die Möbelkomponente wenigstens eine Überlastschutzvorrichtung. Beispielsweise kann diese mit einer Vorbelastungseinrichtung realisiert sein. Ein Sensor kann einen Positionsunterschied zwischen dem ersten und dem zweiten Möbelteil erfassen und insbesondere detektieren, falls das System bei einem Überlastereignis durchgerutscht ist.

Eine Überlastschutzvorrichtung bietet mehr Sicherheit für den Benutzers und z. B. einen Klemmschutz und/oder Schutz des Motors und/oder des Getriebes selbst und kann auch als Freilauf eingesetzt werden. Vorzugsweise lässt sich das Möbelteil auch manuell betreiben.

Wenigstens eine Überlastschutzvorrichtung arbeitet vorzugsweise mechanisch und/oder thermisch. Die Überlastschutzvorrichtung kann mechanisch und/oder thermisch auslösen.

In allen Fällen ist es bevorzugt, dass die Antriebsanordnung und/oder das Getriebe und/oder der Motor vorzugsweise ausgetauscht werden kann.

Es ist vorteilhaft, dass der Motor keinen weiteren Energiespeicher wie z. B. Federn benötigt.

Das Getriebe besteht vorzugsweise zumindest teilweise aus Metall, es kann aber auch zumindest teilweise oder vollständig aus Kunststoff bestehen.

In bevorzugten Weiterbildungen umfasst das insbesondere als Wand ausgebildete erste Möbelteil wenigstens einen Kern und einen daran ausgebildeten Aufnahmeraum, wobei wenigstens ein Kern mit dem Möbelbeschlag verbunden ist. Möglich ist es auch, dass die Wand wenigstens zwei Kerne und einen Aufnahmeraum umfasst, wobei die zwei Kerne miteinander verbunden sind und an dem Aufnahmeraum der Möbelbeschlag aufgenommen ist.

Ausführungsbeispiele der vorliegenden Erfindung werden im Folgenden mit Bezug auf die beiliegenden Figuren erläutert.

In den Figuren zeigen:
- Figur 1: eine schematische perspektivische Ansicht einer ersten Ausführungsform einer erfindungsgemäßen Möbelkomponente;
- Figur 2: eine schematische perspektivische Ansicht der Möbelkomponente nach Figur 1 in einer anderen Stellung;
- Figuren 3-5: weitere Ausführungsformen erfindungsgemäßer Möbelkomponenten;
- Figur 6: eine Draufsicht auf einen Motor eines Möbelbeschlags einer erfindungsgemäßen Möbelkomponente;
- Figur 7: eine schematische Seitenansicht einer Antriebsanordnung eines Möbelbeschlags;
- Figur 8: eine Draufsicht auf eine Antriebsanordnung für eine erfindungsgemäße Möbelkomponente;
- Figuren 9-11: vergrößerte schematische Details aus Figur 8;
- Figur 12: eine schematische Seitenansicht einer Möbelkomponente mit einem Exzenter an der Antriebsanordnung;
- Figur 13: eine schematische Seitenansicht einer Möbelkomponente mit einem Schubkastenantrieb über eine Zahnstange;
- Figur 14: eine schematische Seitenansicht einer weiteren Möbelkomponente; und
- Figur 15: eine schematische perspektivische Darstellung eines Schrankes.

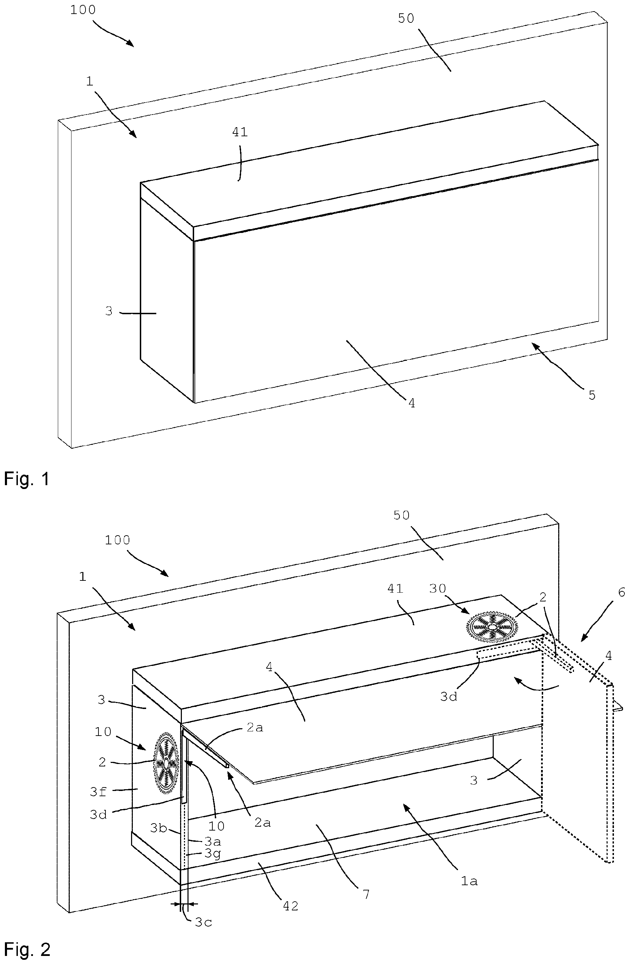

Mit Bezug auf die Figuren 1 und 2 wird ein erstes Ausführungsbeispiel einer erfindungsgemäßen Möbelkomponente erläutert. Figur 1 zeigt eine stark schematische perspektivische Darstellung einer erfindungsgemäßen Möbelkomponente 1 in der ersten Stellung 5, welche hier eine Schließstellung ist. Die Möbelkomponente 1 weist hier wenigstens ein erstes Möbelteil 3 auf, welches hier als Wand ausgebildet ist. Wie aus Figur 2 hervorgeht, ist auch an einem anderen seitlichen Ende der Möbelkomponente 1 eine Wand als erstes Möbelteil vorgesehen.

Es ist aber auch möglich, dass eine Möbelkomponente 1 nur eine einzige seitliche Wand umfasst, die dann beispielsweise in der Mitte der Möbelkomponente 1 vorgesehen ist.

Hier ist die Möbelkomponente 1 aber insgesamt als Schrank bzw. Oberschrank 100 ausgebildet. Die Möbelkomponente ist an einer Raumwand 50 befestigt und weist einen Oberboden 41 auf. Das zweite Möbelteil 4 ist relativ zu dem ersten Möbelteil 3 bewegbar.

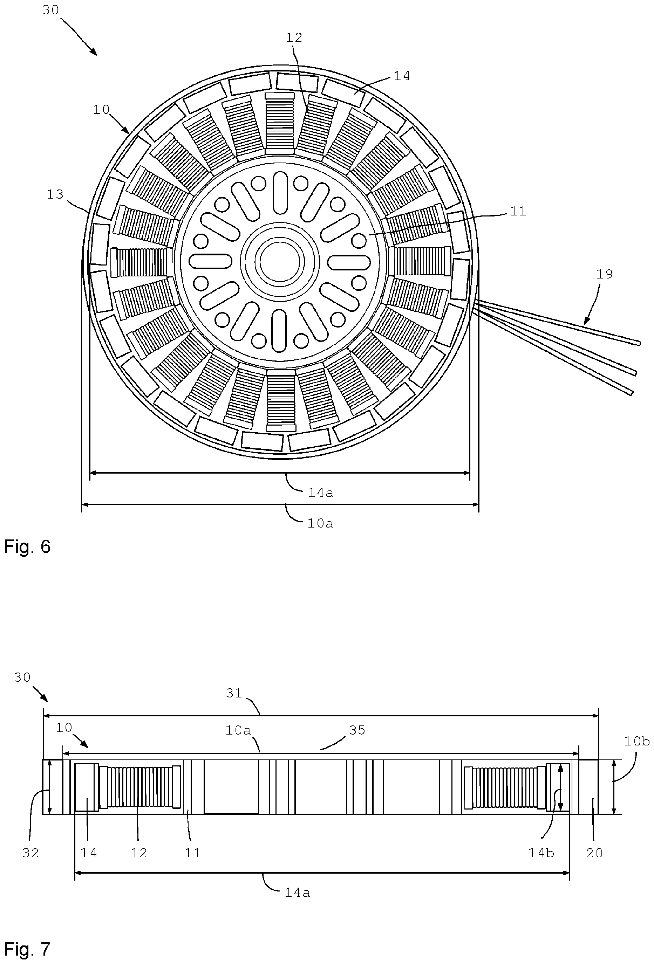

Figur 2 zeigt die Möbelkomponente 1 bzw. den Oberschrank 100 in der zweiten Stellung 6, in der das zweite Möbelteil 4 geöffnet ist. Hier ist das zweite Möbelteil 4 als Klappe ausgebildet und wird über den Möbelbeschlag 2 beweglich zwischen der in Figur 1 dargestellten geschlossenen Stellung 5 und der in Figur 2 dargestellten geöffneten Stellung 6 bewegbar geführt. Zum Antrieb dient der Motor 10, der des besseren Verständnisses eingezeichnet ist. Tatsächlich befindet er sich innerhalb der Seitenwand und ist bei einer massiven Wand 3 wie hier von außen praktisch nicht sichtbar. Da die Antriebsanordnung 30 (vergleiche Figur 6) mit dem Motor 10 vollständig innerhalb des Aufnahmeraums 3d in der Wand 3 aufgenommen ist, ist an sich nur der an dem bewegbaren Möbelteil 4 befestigte Teil der Beschlagskomponente 2a des Möbelbeschlags 2 erkennbar.

Der Aufnahmeraum 3d ist seitlich vollständig von der Wand 3 umgeben, sodass die resultierende Breite des Aufnahmeraums 3d kleiner ist als die Wandstärke 3c der Wand.

Der Oberschrank 100 umfasst des Weiteren einen Unterboden 42. Im Inneren des Oberschrankes 100 ist ein Stauraum 7 zur Aufnahme unterschiedlichster Gegenstände ausgebildet. Der Stauraum 7 ist von der Vorderseite, die hier die Zugangsseite 1a bildet, zugänglich. Der Aufnahmeraum 3d ist ebenfalls nach vorne hin geöffnet. Der Aufnahmeraum 3d wird praktisch durch eine Ausnehmung in der Wand 3 gebildet.

In Figur 2 ist zusätzlich gestrichelt noch eine alternative Ausführungsform eingezeichnet, bei der der Oberboden 41 das erste Möbelteil bildet. Gestrichelt eingezeichnet ist in dem Oberboden 41 ein Aufnahmeraum 3d, in dem die Antriebsanordnung 30 aufgenommen ist, um die ebenfalls gestrichelt eingezeichnete Drehtür als zweites Möbelteil 4 mit dem Motor 10 gesteuert antreiben zu können.

In anderen Ausgestaltungen ist es auch möglich der Motor 10 und die Antriebsanordnung 30 in der bewegbaren Tür oder Klappe angeordnet sind und nicht in dem feststehenden Möbelteil.

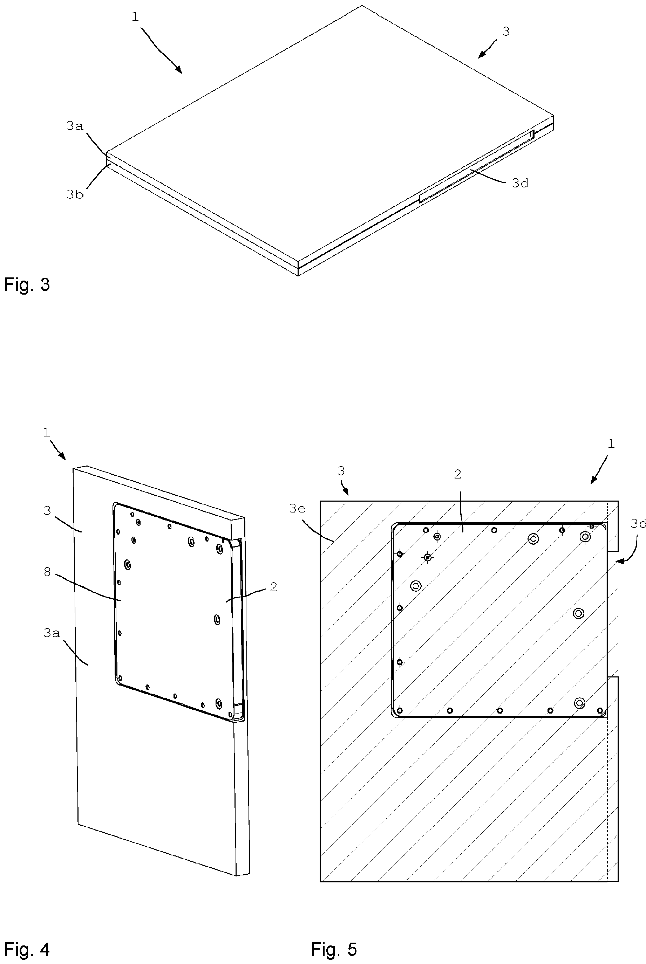

In den Figuren 3 - 5 sind unterschiedliche Ausführungen von Möbelkomponenten 1 in perspektivischer Darstellung abgebildet, wobei in Figur 3 die Wand 3 durch 2 Kerne 3a und 3b hergestellt wird, an denen jeweils eine Ausnehmung ausgebildet ist. Zusammen ergeben die Ausnehmungen an den Kernen 3a und 3b den Aufnahmeraum 3d, an dem die Antriebsanordnung 30 zusammen mit dem Möbelbeschlag 2 aufgenommen wird.

Bei der Fertigung ist es möglich, dass der Möbelbeschlag 2 mit der Antriebsanordnung 30 in die Ausnehmungen an den Kernen 3a und 3b eingelegt wird, bevor die beiden Kerne miteinander verbunden und insbesondere verklebt werden. Möglich ist es auch, dass die vordere Öffnung des Aufnahmeraums 3d so bemessen ist, dass der Möbelbeschlag 2 nach der vollständigen Herstellung des ersten Möbelteils 3 bzw. der Wand in den Aufnahmeraum 3d von außen eingeschoben werden kann.

In Figur 4 ist eine Variante abgebildet, bei der nur ein Kern 3a verwendet wird und bei dem die Ausnehmung bis zu einer seitlichen Oberfläche der Wand erreicht. Dann kann der Möbelbeschlag 2 mit der Antriebsanordnung 30 von der Seite in den Aufnahmeraum 3d eingelegt werden.

In Figur 4 ist zu erkennen, dass der Möbelbeschlag 2 ein hier metallisches Gehäuse 8 aufweist, in dessen Innerem die Antriebsanordnung 30 untergebracht ist.

Figur 5 zeigt eine Variante der Möbelkomponente 1, bei der ebenfalls nur ein Kern 3a eingesetzt wird, dessen Ausnehmung zur Aufnahme des Möbelbeschlags 2 ausgebildet ist. Nach der Montage des Möbelbeschlags in dem Aufnahmeraum 3d der Möbelkomponente 1 kann anschließend die hier schraffiert eingezeichnete Decklage 3e aufgebracht werden, sodass nur an der vorderen Stirnseite der Möbelbeschlag 2 innerhalb des Aufnahmeraums 3d zugänglich verbleibt. Mit einer Decklage kann die Antriebsanordnung 30 teilweise oder insbesondere vollständig abgedeckt werden.

Die gestrichelte Kontur an der vorderen Stirnseite zeigt, dass der Zugang zu dem Aufnahmeraum 3d beschränkt sein kann. Bei dieser Variante müsste zum Austausch des Möbelbeschlags 2 die Decklage 3e entfernt werden.

Figur 6 zeigt eine Draufsicht auf eine Ausführung der Antriebsanordnung 30 mit dem Motor 10. Eingesetzt wird ein Außenläufermotor, bei dem an dem Stator 11 hier insgesamt über dem Umfang verteilt 24 elektrische Spulen 12 angeordnet sind. Entsprechend sind an dem Rotor 13 auf dem Umfang verteilt hier 24 Permanentmagnete 14 als Magnetelemente um den Stator herum angeordnet.

Der als Außenläufermotor ausgebildete Motor 10 weist einen Durchmesser 10a des Rotors von hier etwa 70 mm auf. Der maximale Außendurchmesser an den Permanentmagneten 14 ist etwas geringer und liegt bei etwas über 65 mm.

Der Motor 10 ist als elektrischer bürstenloser Motor ausgeführt. Durch die Konstruktion bedingt können die Anschlusskabel 19 zum Stator geführt werden, sodass eine Übertragung durch Schleifkontakte hier unterbleiben kann, wenn Permanentmagneten 14 eingesetzt werden.

Die Antriebsanordnung 30 und der Motor 10 bilden insgesamt und auch jeweils für sich separat eine flache scheibenförmige Anordnung, wobei das Verhältnis von Außendurchmesser 10a des Motors 10 zu der axialen Baubreite 10b größer zwei oder drei oder vier oder 6 oder 8 oder noch größer ist. Die axiale Breite 10b des Motors 10 kann der axialen Breite der Permanentmagneten 14b entsprechen. Hier weist die Antriebsanordnung 30 die gleiche axiale Breite 10b auf wie der Motor. Ein Abstand 14a zwischen zwei sich gegenüberliegenden Permanentmagneten 14 ist mehrfach größer als eine axiale Breite 14b der Permanentmagneten 14 oder des Motors 10.

In Figur 7 ist die axiale Breite 10b des Motors 10 etwa so groß wie die axiale Breite 32 der Antriebsanordnung 30. Das Verhältnis des Durchmessers 10a des Rotors zu der axialen Breite 10b des Motors ist hier größer als 5:1 und kann Werte größer als 6:1 erreichen und übersteigen. Damit wird ein sehr flach bauender Motor realisiert. Der Durchmesser der Antriebsanordnung ist abhängig von dem eingesetzten Getriebe entsprechend größer. Zentral ist die Rotationsachse 35 eingezeichnet.

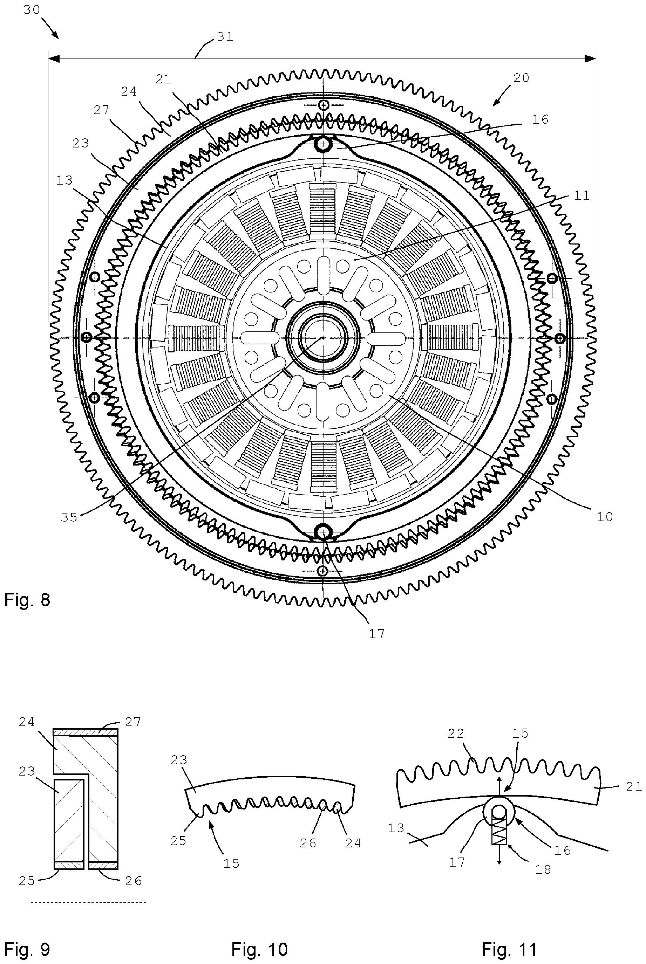

Figur 8 zeigt eine Antriebsanordnung 30 mit einem Getriebe 20 und dem zentral angeordneten Motor 10.

Der Motor 10 weist den zentralen Stator 11 auf, an dem die elektrischen Spulen 12 angeordnet sind. An dem Rotor 13 sind die Permanentmagnete 14 angeordnet. Einstückig mit dem Rotor 13 ausgebildet oder separat daran befestigt ist die unrunde Außenkontur mit den Übertragungseinheiten 16. Hier sind zwei Übertragungseinheiten auf dem Umfang des Rotors 13 vorgesehen. Möglich ist es auch, dass nur eine Übertragungseinheit 16 oder dass drei Übertragungseinheiten auf dem Umfang verteilt angeordnet sind.

Eine Übertragungseinheit 16 drückt lokal begrenzt auf das flexible Zahnringelement 21, welches den Rotor 13 vollständig und geschlossen umgibt. Die Innenabmessungen des flexiblen Zahnringelements 21 sind so abgemessen, dass bei der Drehung des Rotors 13 die Übertragungseinheit 16 das flexible Zahnringelement 21 lokal verformt und lokal nach außen drückt. Dadurch gerät in dem Bereich der Übertragungseinheiten 16 die Außenverzahnung 22 des flexiblen Zahnringelements 21 in definierten Eingriff mit der Innenverzahnung 25 des feststehenden Außenrings 23 und der hier (axial) dahinter angeordneten Innenverzahnung 26 des drehbaren Außenrings 24, von dem in Figur 8 im Wesentlichen nur der äußere Teil mit der Außenverzahnung 27 sichtbar ist.

Der genauere Aufbau und die Funktionsweise der Antriebsanordnung 30 werden in Zusammenschau mit den Figuren 9 - 11 besser verständlich, die auf schematische Art und Weise Details der Antriebsanordnung 30 darstellen.

Figur 9 zeigt dabei einen schematischen Querschnitt durch den feststehenden Außenring 23 und den drehbaren Außenring 24. Es ist erkennbar, dass der feststehende Außenring 23, der insbesondere mit dem Stator 11 verbunden ist, über eine Innenverzahnung 25 verfügt. Hier beträgt die Zähnezahl der Innenverzahnung des feststehenden Außenrings 23 insgesamt 126 Zähne und ist identisch mit der Zähnezahl der Außenverzahnung 22 des flexiblen Zahnringelements 21, welches hier ebenfalls 126 Zähne umfasst. Der drehbare Außenring 24 weist 128 Zähne an seiner Innenverzahnung 26 auf.

Erkennbar ist, dass der drehbare Außenring 24 den feststehenden Außenring 23 praktisch U-förmig umgreift.

In Figur 10 ist schematisch ein Ausschnitt aus der Darstellung von Figur 8 vergrößert dargestellt, wobei hier nur schematisch ein Teil des feststehenden Außenrings 23 und des sich dahinter befindenden drehbaren Außenrings 24 abgebildet sind. Der feststehende Außenring 23 weist die schematisch dargestellte Innenverzahnung 25 auf. Von dem sich dahinter befindenden drehbaren Außenrings 24 sind nur Teile einiger Zähne der Innenverzahnung 26 zu erkennen.

Die Zähnezahl der Innenverzahnung 25 des feststehenden Außenrings 23 unterscheidet sich von der Zähnezahl der Innenverzahnung 26 des drehbaren Außenrings 24. Deshalb werden mit zunehmendem Umfangsabstand von der Anlagestelle 15 die Unterschiede besser sichtbar und es ist ein größerer Anteil der einzelnen Zähne 26 des drehbaren Außenrings 24 sichtbar. Da, wo die Übertragungseinheit 16 für eine lokale Verformung und einen lokalen Eingriff des flexiblen Zahnringelements 21 in die Innenverzahnungen 24 und 26 der Außenringe 23 und 24 sorgt, fluchten beide Verzahnungen, da die Außenverzahnung des flexiblen Zahnringelements 21 dort in beide Innenverzahnungen in den Außenringen 23 und 24 lokal eingreift. Es wird so dafür gesorgt, dass der drehbare Außenring 24 jeweils nachgezogen wird, sodass an der Anlagestelle 15 die Zähne der beiden Verzahnungen 25 und 26 miteinander fluchten, während mit zunehmendem Abstand von der Anlagestelle 15 sich aufgrund der leicht unterschiedlichen Zähnezahl ein entsprechender Versatz ergibt.

Figur 11 zeigt eine vergrößerte und schematische Darstellung des Eingriffs der Übertragungseinheit 16 an der Anlagestelle 15 und die Verformung des flexiblen Zahnringelements 21.

Durch die auf dem Umfang des Rotors 13 angebrachte Übertragungseinheit wird das flexible Zahnringelement 21 lokal und hier radial nach außen gedrückt. Dadurch geraten die Zähne der Außenverzahnung 22 in entsprechenden Eingriff mit den Innenverzahnungen der Außenringe 23 und 24.

Um die Reibung zu senken, ist es bevorzugt, dass an der Anlagestelle 15 die Übertragungseinheit 16 ein drehbares Übertragungselement 17 umfasst, welches beispielsweise als Rolle oder Walze oder dergleichen ausgebildet sein kann und drehbar an dem Rotor aufgenommen ist. Dadurch kann das drehbare Übertragungselement 17 auf dem Innenumfang des flexiblen Zahnringelements 21 ablaufen.

Dargestellt ist in Figur 11 eine Variante, bei der das drehbare Übertragungselement 17 durch eine Vorbelastungseinrichtung 18 radial nach außen gedrückt wird. Die Vorbelastungseinrichtung 18 kann beispielsweise über eine Feder verfügen, um das drehbare Übertragungselement 17 nach außen zu drücken. Die Vorbelastungseinrichtung kann auch aus einem Formgedächtniselement bestehen, dass sich sowohl bei einer mechanischen als auch bei einer thermischen Überlastung des Motors verformt und für einen Freilauf des flexiblen Zahnringelements sorgt.

Durch die Feder wird für einen gleichmäßigen Eingriff gesorgt. Ein Vorteil des Einsatzes einer Vorbelastungseinrichtung ist auch, dass ein einfacher Überlastschutz integriert werden kann.

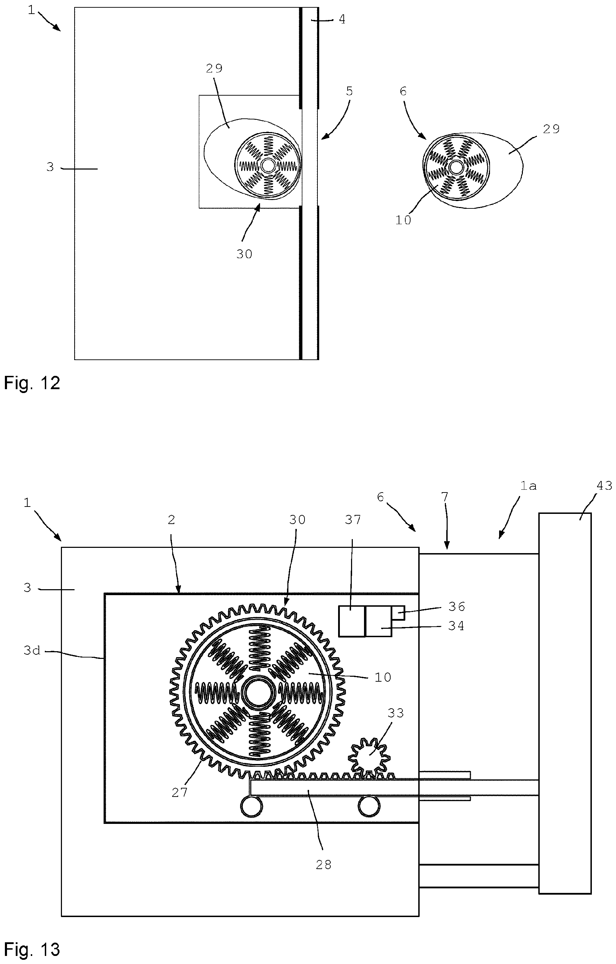

Figur 12 zeigt eine schematische Seitenansicht einer Möbelkomponente 1, bei der die Antriebsanordnung 30 mittels einer hier exzentrischen Getriebekomponente das zweite Möbelteil 4 von der in Figur 12 links dargestellten Schließstellung 5 in eine wenigstens etwas geöffnete Stellung überführen kann. Durch Drehung der hier etwa eiförmigen Getriebekomponente 29 kann das zweite Möbelteil hier nach rechts bewegt werden, sodass sich ein Öffnungsspalt ergibt. Die Antriebsanordnung 30 ist in Figur 12 rechts in einer entsprechenden Stellung dargestellt, die eine Öffnungsstellung 6 ergibt. Bei dem Öffnungsvorgang durch die Antriebsanordnung 30 ist nur eine Teilumdrehung des Getriebes und/oder des Motors 10 notwendig. Die Teilumdrehung läuft mit sehr niedriger Geschwindigkeit, so dass das zweite Möbelteil 4 nicht schlagartig aufgestoßen wird.

Figur 13 zeigt eine Variante der Möbelkomponente 1, bei der die Antriebsanordnung 30 über eine Außenverzahnung 27 eine Schubstange 28 als Getriebekomponente 29 antreibt. Durch den Antrieb der Schubstange 28 kann beispielsweise die Frontblende 43 bzw. ein Schubkasten geöffnet werden, sodass in der dargestellten Öffnungsstellung 6 der Stauraum 7 von der hier oben angeordneten Zugangsseite 1a aus zugänglich ist.

Die Antriebsanordnung 30 ist hier in dem Aufnahmeraum 3d in dem ersten Möbelteil 3 aufgenommen. Auch die weiteren Teile des Möbelbeschlags 2 sind dort aufgenommen.

Hier in Figur 13 ist an dem Möbelbeschlag 2 beispielhaft für alle Ausführungsbeispiele eine Steuerung 34 eingezeichnet, die über eine Datenschnittstelle oder wenigstens eine Datenschnittstelle 36 verfügt. Über die Datenschnittstelle 36 kann drahtgebunden und/oder drahtlos mit einer zentralen Haussteuerung oder direkt mit einem Benutzer kommuniziert werden. Beispielsweise kann über WLAN, Bluetooth, ZigBEE, ZWAVE oder andere gängige Protokolle auf unterschiedlichen Frequenzen und zum Beispiel 433 MHz oder 868 MHz mit der Möbelkomponente kommuniziert werden. Dadurch ist es möglich, über eine Haussteuerung oder über einen stationären oder mobilen Computer die Öffnungs- und/oder Schließbewegung an der Möbelkomponente 1 zu steuern. Der Energiespeicher 37 kann vorgesehen sein, um beispielsweise bei einem mobilen Möbelstück für eine Anzahl von Öffnungs- und/oder Schließbewegungen und oder für einen vorbestimmten Zeitraum genügend Energie für den Betrieb bereitzustellen.

An die Steuerung ist wenigstens ein Sensor 33 angeschlossen, der die Bewegung des Motors 10 und/oder des zweiten Möbelteils 4 überwacht.

Des Weiteren kann der Motor 10 interne Sensoren aufweisen, mit denen eine Positionserkennung möglich ist. Möglich ist es auch, den Antriebsstrom des Motors 10 zu überwachen, um aus den Messergebnissen auf Hindernisse und/oder an Endlagen zu schließen.

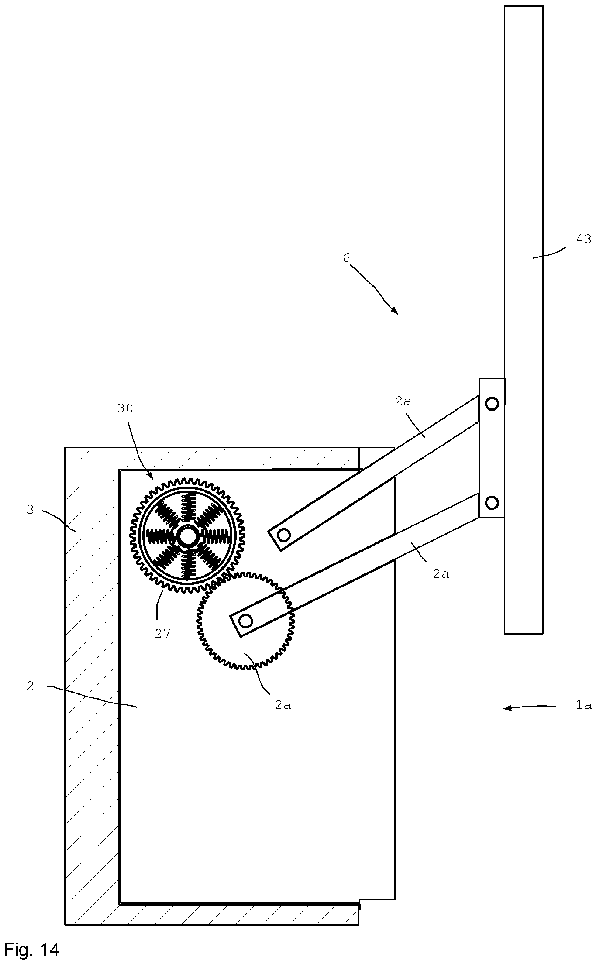

Figur 14 zeigt eine Variante, bei der die Antriebsanordnung 30 über eine Außenverzahnung 27 eine Beschlagkomponente 2a und hier ein Zahnrad antreibt, mit dem weitere Beschlagkomponenten 2a, die Hebel und dergleichen umfassen können, angetrieben werden, um eine Frontblende 43 als zweites Möbelteil 4 anzuheben und den Stauraum 7 von der vorderen Zugangsseite 1a aus zugänglich zu machen.

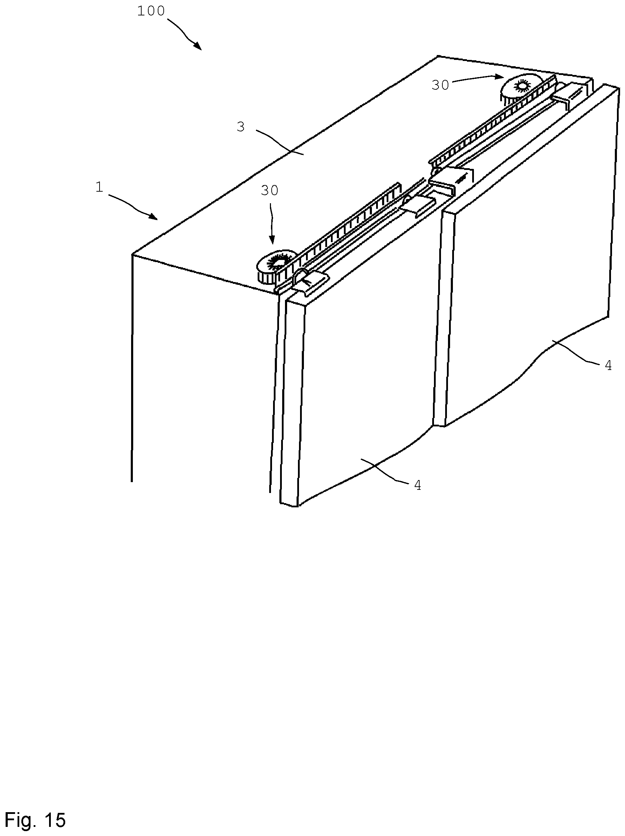

Figur 15 zeigt schließlich einen Schrank bzw. Oberschrank 100, bei dem die Antriebsanordnung 30 oben angeordnet ist und zur seitlichen Verschiebung zweier als Schiebetüren ausgeführten zweiten Möbelteile dienen. An der Antriebsanordnung 30 kann dazu eine Zahnstange vorgesehen sein oder es sind andere Übertragungsmechanismen implementiert, um die Drehbewegung des Motors 10 in eine seitliche Verschiebung der Schiebetüren 4 zu bewirken.

Insgesamt stellt die Erfindung eine vorteilhafte Möbelkomponente 1 zu Verfügung, bei der nur wenig Bauraum für den elektrischen Motor und den Antrieb insgesamt verwendet wird. Die Antriebsanordnung insgesamt kann sehr flach ausgestaltet werden, sodass die Antriebsanordnung innerhalb einer Möbelwand untergebracht werden kann.

An der Möbelkomponente ist vorzugsweise ein Stauraum 7 ausgebildet oder der Stauraum 7 ist der Möbelkomponente zugeordnet. Der Stauraum ist insbesondere als Aufnahmeabteil bzw. an einem Aufnahmeabteil ausgebildet. Ein Aufnahmeabteil weist vorzugsweise wenigstens einen oberen Boden und/oder wenigstens einen unteren Boden und wenigstens einer seitliche Wand auf bzw. wird dadurch gebildet. Das Aufnahmeabteil ist durch das bewegbare bzw. zweite Möbelteil wenigstens teilweise abdeckbar oder verschließbar. Das Aufnahmeabteil kann so beispielsweise auch an einem Schubkasten ausgebildet sein, der an einer Wand 3 geführt wird. Der Stauraum 7 befindet sich dann im Schubkasten.

Der Möbelbeschlag kann neben dem Motor 10 bzw. der Antriebsanordnung 30 wenigstens eine weitere Beschlagkomponente aus einer Gruppe von Beschlagkomponenten umfassen, welche Hebelarme, Drehstellen, Anschläge, Dämpferkomponenten Kraftspeichereinrichtungen, Aktuatoren, Sensoren, Spiralfedern, Druckspeicher, teleskopierbare Schienensysteme, Gleitschienen wie zu Plattenschienen, Mittelschienen, Frontblendenschienen, Anschlussprofile, Befestigungselemente und Kulissenführungen umfasst.

Vorzugsweise umfasst eine Wand als erstes Möbelteil wenigstens einen Kern oder auch zwei oder mehr Kerne. Wenn die Wand zwei Kerne umfasst, sind diese insbesondere miteinander verbunden.

Vorzugsweise ist an der Wand bzw. dem Kern oder den Kernen einer Wand ein Aufnahmeraum 3d ausgebildet. Vorzugsweise bewegt sich wenigstens eine der Beschlagkomponenten 2a bzw. ein Teil des Möbelbeschlags 2 beim Antrieb des Motors 10 aus der Wand 3 heraus.

Der Kern und/oder der Möbelbeschlag kann mit wenigstens einer Decklage verbunden sein. An den Seitenflächen der Wand kann eine durchgängige Decklage ausgebildet sein.

Die Wand umfasst vorzugsweise zwei gegenüberliegende Seitenflächen und eine Mehrzahl an Stirnseiten, wobei an der Wand zwischen den Seitenflächen der Aufnahmeraum ausgebildet ist, in dem der Möbelbeschlag 2 zum Antrieb und zur Führung eines bewegbaren Möbelteils eines zweiten bewegbaren Möbelteils aufgenommen ist. Der Aufnahmeraum kann an einer oder auch an wenigstens zwei Stirnseiten Öffnungsabschnitte aufweisen, an denen der Aufnahmeraum nach außen geöffnet ist. Es ist möglich, dass der Möbelbeschlag 2 bei der Überführung von der ersten Stellung in die zweite Stellung sich wenigstens in den beiden Öffnungsabschnitten an den wenigstens zwei Stirnseiten bewegt.

**Bezugszeichenliste:**

| | | | |
|---|---|---|---|
| 1 | Möbelkomponente | 15 | Anlagestelle |
| 1a | Zugangsseite | 16 | Übertragungseinheit |
| 2 | Möbelbeschlag | 17 | drehbares Übertragungsele-ment |
| 2a | Beschlagkomponente | | |
| 3 | Möbelteil, Wand | 18 | Vorbelastungseinrichtung |
| 3a | Kern | 19 | Kabel |
| 3b | Kern | 20 | Getriebe |
| 3c | Wandstärke | 21 | Getriebeteil, Zahnringele-ment |
| 3d | Aufnahmeraum in 3 | | |
| 3e | Decklage | 22 | Außenverzahnung von 21 |
| 3f | Seitenfläche | 23 | feststehender Außenring |
| 3g | Stirnseite | 24 | drehbarer Außenring |
| 4 | Möbelteil, bewegbares Mö-belteil, Klappe, Deckel, Tür | 25 | Innenverzahnung von 23 |
| | | 26 | Innenverzahnung von 24 |
| | | 27 | Außenverzahnung |
| 5 | erste Stellung, Schließstellung | 28 | Schubstange |
| | | 29 | Getriebekomponente |
| 6 | zweite Stellung, Öffnungsstellung | 30 | Antriebsanordnung |
| | | 31 | Durchmesser |
| 7 | Stauraum | 32 | axiale Breite |
| 8 | Gehäuse | 33 | Sensor |
| 10 | Motor | 34 | Steuerung |
| 10a | Durchmesser | 35 | axiale Richtung |
| 10b | axiale Breite | 36 | Datenschnittstelle |
| 11 | Stator | 37 | Energiespeicher |
| 12 | Spule | 41 | Boden, Oberboden |
| 13 | Rotor | 42 | Boden, Unterboden |
| 14 | Magnetelement, Permanentmagnet | 43 | Frontblende |
| | | 50 | Raumwand |
| 14a | Abstand | 100 | Schrank, Oberschrank |
| 14b | Breite von 14 | | |

## Patentansprüche

1. Möbelkomponente (1) mit einem antreibbaren Möbelbeschlag (2) zur beweglichen Verbindung zweier Möbelteile (3, 4) und einem elektrischen Motor (10), wobei der Möbelbeschlag (2) an einem ersten Möbelteil (3) der beiden Möbelteile (3, 4) anordenbar ist und dafür vorgesehen ist, mit dem Motor (10) über ein Getriebe (20) das zweite Möbelteil (4) anzutreiben, um eine motorunterstützte Bewegung des zweiten Möbelteils (4) relativ zu dem ersten Möbelteil (3) wenigstens abschnittsweise zwischen wenigstens einer ersten Stellung (5) und wenigstens einer zweiten Stellung (6) zu erzeugen, wobei der Motor (10) einen zentralen Stator (11) mit bestrombaren Spulen (12) und einen den Stator (11) umgebenden Rotor (13) umfasst, und wobei der Rotor (13) das Getriebe (20) antreibt, **dadurch gekennzeichnet, dass** der Motor (10) und das Getriebe (20) eine flache und im Wesentlichen scheibenförmige Antriebsanordnung (30) bilden, und dass das Antriebsmoment an ein den Rotor (13) innerhalb der scheibenförmigen Antriebsanordnung (30) umgebendes Getriebeteil (21) abgegeben wird, mittels dessen Bewegung das zweite Möbelteil (4) antreibbar ist.

2. Möbelkomponente (1) nach dem vorhergehenden Anspruch, wobei das erste Möbelteil (3) als Wand ausgebildet ist.

3. Möbelkomponente (1) nach einem der vorhergehenden Ansprüche, wobei der Möbelbeschlag (2) wenigstens teilweise oder vollständig in wenigstens einer Stellung (5) in einem Aufnahmeraum (3d) in dem ersten Möbelteil (3) aufnehmbar ist.

4. Möbelkomponente nach einem der vorhergehenden Ansprüche, wobei das zweite Möbelteil (4) als Klappe, Deckel, Tür oder Schubkasten ausgebildet ist und/oder wobei das zweite Möbelteil (4) in wenigstens einer Stellung einen Stauraum (7) wenigstens teilweise abdeckt.

5. Möbelkomponente (1) nach einem der vorhergehenden Ansprüche, wobei ein Verhältnis von einem Durchmesser (31) der Antriebsanordnung (30) zu einer axialen Breite (32) der scheibenförmigen Antriebsanordnung (30) größer als 3:1 oder größer als 5:1 beträgt
und/oder wobei eine axiale Breite (32) der scheibenförmigen Antriebsanordnung (30) kleiner 25 mm oder kleiner 16 mm oder kleiner 14 mm beträgt
und/oder wobei ein maximaler Außendurchmesser (32) der Antriebsanordnung (30) größer 50 mm oder größer 75 mm beträgt und/oder wobei das Getriebe (20) als Wellgetriebe, Zykloidgetriebe oder Planetengetriebe ausgebildet ist oder wenigstens ein solches umfasst.

6. Möbelkomponente (1) nach einem der vorhergehenden Ansprüche, wobei der Rotor (13) eine unrunde Außenkontur antreibt und wobei die unrunde Außenkontur an wenigstens einer Anlagestelle (15) von innen mit einer Übertragungseinheit (16) gegen ein flexibles Zahnringelement (21) mit Außenverzahnung (22) drückt und wobei das flexible Zahnringelement (21) in eine Innenverzahnung (25, 26) wenigstens eines Außenrings (23, 24) eingreift.

7. Möbelkomponente (1) nach dem vorhergehenden Anspruch, wobei das flexible Zahnringelement (21) drehfest zum Stator (11) ausgebildet ist.

8. Möbelkomponente (1) nach einem der beiden vorhergehenden Ansprüche, wobei die Übertragungseinheit (16) wenigstens ein drehbares Übertragungselement (17) umfasst.

9. Möbelkomponente nach einem der drei vorhergehenden Ansprüche, wobei die Übertragungseinheit (16) durch eine Vorbelastungseinrichtung (18) nach außen zur Einwirkung auf das flexible Zahnringelement (21) vorbelastet ist.

10. Möbelkomponente nach einem der vier vorhergehenden Ansprüche, wobei zwei Außenringe (23, 24) mit Innenverzahnung (25, 26) umfasst sind, wobei einer der beiden Außenringe (23) feststehend und der andere Außenring (24) drehbar aufgenommen ist, und wobei die Innenverzahnung (26) des drehbaren Außenrings (24) eine abweichende Zähnezahl aufweist als die Innenverzahnung (25) des feststehenden Außenrings (23),
und wobei insbesondere die Zähnezahl der Außenverzahnung (22) des flexiblen Zahnringelements (21) anders ist als die Zähnezahl der Innenverzahnung (26) des drehbaren Außenrings (24) und/oder wobei die Zähnezahl der Außenverzahnung (22) des flexiblen Zahnringelements (21) gleich der Zähnezahl der Innenverzahnung (25) des feststehenden Außenrings (23) ist.

11. Möbelkomponente (1) nach einem der vorhergehenden Ansprüche, wobei der drehbare Außenring (24) eine äußere Antriebskomponente (27) in Form eines Exzenters, einer Verzahnung, eine Wickelvorrichtung, eine Hebelanordnung oder ähnliches aufweist und über die äußere Antriebskomponente (27) mit dem bewegbaren Möbelteil (4) gekoppelt ist und darüber den Möbelbeschlag (2) mittelbar oder unmittelbar antreibt und/oder wobei das Getriebe (20) ein Übersetzungsverhältnis kleiner 1:20 oder kleiner 1:40 aufweist.

12. Möbelkomponente (1) nach einem der vorhergehenden Ansprüche, umfassend wenigstens einen Sensor (33) zur Erfassung oder Abschätzung wenigstens einer Position des zweiten Möbelteils (4), wobei der Sensor (33) insbesondere als digitaler und/oder analoger Sensor ausgebildet ist.

13. Möbelkomponente (1) nach einem der vorhergehenden Ansprüche, wobei der Möbelbeschlag (2) bei einer Bewegung zwischen der ersten und der zweiten Stellung (5, 6) kontinuierlich mit dem zweiten Möbelteil (4) gekoppelt ist und wobei insbesondere das erste Möbelteil (3) den Möbelbeschlag (2) von wenigstens vier oder wenigstens fünf Seiten umfasst.

14. Möbelkomponente (1) nach einem der vorhergehenden Ansprüche, wobei zumindest der elektrisch angetriebene Teil des Möbelbeschlags (2) von einem Gehäuse (8) aus Metall oder flammhemmend geschützt und/oder wenigstens teilweise umgeben ist und/oder wobei das erste Möbelteil wenigstens zu einem erheblichen Teil aus Holz, Kunststoff, flammhemmenden Kunststoff oder Holzspanwerkstoffen besteht.

15. Möbelkomponente (1) nach einem der vorhergehenden Ansprüche, wobei der Motor (10) mit Gleichspannung betrieben wird und wobei die Gleichspannung kleiner gleich 120V oder kleiner gleich 75V oder kleiner 60V ist
und/oder wobei an dem Stator (11) mindestens fünf Spulen (12) angeordnet sind und/oder wobei ein maximaler Abstand (14a) zwischen zwei gegenüberliegenden Magnetelementen (14) größer ist, als eine Breite (14b) eines Magnetelementes (14) in Richtung der Rotationsachse
und/oder wobei wenigstens eine Überlastschutzvorrichtung umfasst ist, wobei insbesondere ein Sensor einen Positionsunterschied zwischen dem ersten und dem zweiten Möbelteil erfasst.

## Claims

1. Furniture component (1) with a driven furniture fitting (2) to movably connect two furniture elements (3, 4), and an electric motor (10), wherein the furniture fitting (2) can be disposed on a first furniture element (3) of the two furniture elements (3, 4), and is provided to drive the second furniture element (4) by means of the motor (10) via a transmission (20), so as to generate motor-assisted movement of the second furniture element (4) relative to the first furniture element (3), at least in sections, between at least one first position (5) and at least one second position (6), wherein the motor (10) comprises a central stator (11) with current-conductible coils (12) and a rotor (13) surrounding the stator (11), and wherein the rotor (13) drives the transmission (20),
**characterized in that**
the motor (10) and the transmission (20) form a drive configuration (30) that is flat and substantially disk-shaped, and that the driving torque is delivered to a transmission part (21) surrounding the rotor (13) inside of the disk-shaped drive configuration (30), whose movement can drive the second furniture element (4).

2. The furniture component (1) according to the preceding claim, wherein the first furniture element (3) is configured as a wall.

3. The furniture component (1) according to any of the preceding claims, wherein in at least one position (5), the furniture fitting (2) can at least partially or entirely be accommodated in a receiving space (3d) in the first furniture element (3).

4. The furniture component according to any of the preceding claims, wherein the second furniture element (4) is configured as a flap, lid, door, or drawer, and/or wherein the second furniture element (4) covers at least part of a storage space (7) in at least one position.

5. The furniture component (1) according to any of the preceding claims, wherein the relationship of the diameter (31) of the drive configuration (30) to the axial width (32) of the disk-shaped drive configuration (30) is larger than 3:1 or larger than 5:1, and/or wherein the axial width (32) of the disk-shaped drive configuration (30) is less than 25 mm or less than 16 mm or less than 14 mm, and/or wherein the maximum external diameter (32) of the drive configuration (30) is larger than 50 mm or larger than 75 mm, and/or wherein the transmission (20) is configured as, or at least comprises, a harmonic drive, cycloidal gear or planetary gear.

6. The furniture component (1) according to any of the preceding claims, wherein the rotor (13) drives a non-round outer contour, and wherein in at least one contact point (15) a transmission unit (16) urges the non-round outer contour from the inside against a flexible annular gear member (21) with an external toothing (22), and wherein the flexible annular gear member (21) engages in the internal toothing (25, 26) of at least one outer ring (23, 24).

7. The furniture component (1) according to the preceding claim, wherein the flexible annular gear member (21) is configured non-rotatably relative to the stator (11).

8. The furniture component (1) according to any of the two preceding claims, wherein the transmission unit (16) comprises at least one rotary transmission member (17).

9. The furniture component according to any of the three preceding claims, wherein the transmission unit (16) is biased outwardly by a biasing device (18) for acting on the flexible annular gear member (21).

10. The furniture component according to any of the four preceding claims, wherein two outer rings (23, 24) with internal toothings (25, 26) are comprised, wherein one of the two outer rings (23) is accommodated stationary and the other of the outer rings (24), rotatably, and wherein the internal toothing (26) of the rotatable outer ring (24) shows a tooth number different from the internal toothing (25) of the stationary outer ring (23), and wherein in particular the tooth number of the external toothing (22) of the flexible annular gear member (21) is different from the tooth number of the internal toothing (26) of the rotatable outer ring (24), and/or wherein the tooth number of the external toothing (22) of the flexible annular gear member (21) equals the tooth number of the internal toothing (25) of the stationary outer ring (23).

11. The furniture component (1) according to any of the preceding claims, wherein the rotatable outer ring (24) comprises an outer drive component (27) in the shape of an eccentric member, a toothing, winding device, lever arrangement or the like, and through the external drive component (27) is coupled with the movable furniture element (4), through which it drives the furniture fitting (2) indirectly or directly, and/or wherein the transmission (20) shows a gear ratio of less than 1:20 or less than 1:40.

12. The furniture component (1) according to any of the preceding claims, comprising at least one sensor (33) to capture or estimate at least one position of the second furniture element (4), wherein the sensor (33) is in particular configured as a digital and/or analog sensor.

13. The furniture component (1) according to any of the preceding claims, wherein in movements between the first and second positions (5, 6), the furniture fitting (2) is continuously coupled with the second furniture element (4), and wherein in particular the first furniture element (3) envelops the furniture fitting (2) on at least four or at least five sides.

14. The furniture component (1) according to any of the preceding claims, wherein at least the electrically driven part of the furniture fitting (2) is protected, and/or at least partially surrounded, by a housing (8) of metal or a flame-retardant material, and/or wherein the first furniture element consists at least considerably of wood, plastic, flame-retardant plastic, or particle board.

15. The furniture component (1) according to any of the preceding claims, wherein the motor (10) is operated at DC voltage, and wherein the DC voltage is less than or equal to 120 V, or less than or equal to 75 V, or less than 60 V, and/or wherein at least five coils (12) are disposed on the stator (11), and/or wherein the maximum distance (14a) between two opposite magnetic elements (14) is larger than is the width (14b) of a magnetic element (14) in the direction of the rotational axis, and/or wherein at least one overload protection device is comprised, wherein in particular a sensor captures a deviation of position between the first and second furniture elements.

## Revendications

1. Composant de meuble (1) doté d'une ferrure pour meuble (2) pouvant être entraînée pour relier de façon mobile deux pièces de meuble (3, 4), et d'un moteur électrique (10), ladite ferrure pour meuble (2) pouvant être agencée sur une première pièce de meuble (3) des deux pièces de meuble (3, 4) et étant prévue pour entraîner la deuxième pièce de meuble (4) avec le moteur (10) par l'intermédiaire d'un engrenage (20), afin de générer un mouvement assisté par moteur de la deuxième pièce de meuble (4) par rapport à la première pièce de meuble (3) au moins partiellement entre au moins une première position (5) et au moins une deuxième position (6), ledit moteur (10) comprenant un stator central (11) doté de bobines (12) pouvant être alimentées en courant, et un rotor (13) entourant le stator (11), et ledit rotor (13) entraînant l'engrenage (20), **caractérisé en ce que** le moteur (10) et l'engrenage (20) forment un agencement d'entraînement (30) plat et sensiblement sous forme de disque, et **en ce que** le couple d'entraînement est transmis à un élément d'engrenage (21) entourant le rotor (13) à l'intérieur dudit agencement d'entraînement (30) en forme de disque, au moyen du mouvement duquel la deuxième pièce de meuble (4) peut être entraînée.

2. Composant de meuble (1) selon la revendication précédente, la première pièce de meuble (3) étant conçue comme paroi.

3. Composant de meuble (1) selon l'une quelconque des revendications précédentes, la ferrure pour meuble (2) pouvant être reçue au moins partiellement ou totalement dans au moins une position (5) dans une cellule de réception (3d) dans la première pièce de meuble (3).

4. Composant de meuble selon l'une quelconque des revendications précédentes, la deuxième pièce de meuble (4) étant conçue comme abattant, couvercle, porte ou tiroir, et/ou ladite deuxième pièce de meuble (4) recouvrant au moins partiellement un espace de rangement (7) dans au moins une position.

5. Composant de meuble (1) selon l'une quelconque des revendications précédentes, un rapport entre un diamètre (31) de l'agencement d'entraînement (30) et une largeur axiale (32) de l'agencement d'entraînement en forme de disque (30) étant supérieur à 3:1 ou supérieur à 5:1,
et/ou une largeur axiale (32) de l'agencement d'entraînement (30) étant inférieure à 25 mm ou inférieure à 16 mm ou inférieure à 14 mm,
et/ou un diamètre extérieur maximal (32) de l'agencement d'entraînement (30) étant supérieur à 50 mm ou supérieur à 75 mm,
et/ou l'engrenage (20) étant conçu comme engrenage à onde de déformation, engrenage hélicoïdal ou engrenage planétaire ou comprenant au moins un tel engrenage.

6. Composant de meuble (1) selon l'une quelconque des revendications précédentes, le rotor (13) entraînant un contour extérieur non rond et ledit contour extérieur non rond appuyant de l'intérieur en au moins un point d'appui (15) avec une unité de transmission (16) contre un élément de bague dentée souple (21) à denture extérieure (22), et ledit élément de bague dentée souple (21) s'engageant dans une denture intérieure (25, 26) d'au moins une bague extérieure (23, 24).

7. Composant de meuble (1) selon la revendication précédente, ledit élément de bague dentée souple (21) étant conçu fixe en rotation par rapport au stator (11).

8. Composant de meuble (1) selon l'une quelconque des revendications précédentes, l'unité de transmission (16) comprenant au moins un élément de transmission (17) rotatif.

9. Composant de meuble selon l'une quelconque des trois revendications précédentes, l'unité de transmission (16) étant mise en précontrainte vers l'extérieur par un dispositif de précontrainte (18) pour agir sur l'élément de bague dentée souple (21).

10. Composant de meuble selon l'une quelconque des quatre revendications précédentes, comprenant deux bagues extérieures (23, 24) à denture intérieure (25, 26), l'une des deux bagues extérieures (23) étant montée fixe et l'autre bague extérieure (24) étant montée en rotation, et la denture intérieure (26) de la bague extérieure rotative (24) présentant un nombre de dents différent de celui de la denture intérieure (25) de la bague extérieure fixe (23),
et notamment le nombre de dents de la denture extérieure (22) de l'élément de bague dentée souple (21) étant différent du nombre de dents de la denture intérieure (26) de la bague extérieure rotative (24), et/ou le nombre de dents de la denture extérieure (22) de l'élément de bague dentée souple (21) étant égal au nombre de dents de la denture intérieure (25) de la bague extérieure fixe (23).

11. Composant de meuble (1) selon l'une quelconque des revendications précédentes, la bague extérieure rotative (24) présentant un composant d'entraînement extérieur (27) en forme d'excentrique, d'une denture, d'un dispositif d'enroulement, d'un agencement de levier ou similaire, et étant couplée à la pièce de meuble mobile (4) par l'intermédiaire du composant de meuble (27) et entraînant par ce biais directement ou indirectement la ferrure pour meuble (2), et/ou l'engrenage (20) présentant un rapport de transmission inférieur à 1:20 ou inférieur à 1:40.

12. Composant de meuble (1) selon l'une quelconque des revendications précédentes, comprenant au moins un capteur (33) destiné à détecter ou estimer au moins une position de la deuxième pièce de meuble (4), le capteur (33) étant conçu notamment comme capteur numérique et/ou analogique.

13. Composant de meuble (1) selon l'une quelconque des revendications précédentes, la ferrure pour meuble (2) étant couplée de manière continue à la deuxième pièce de meuble (4) lors d'un mouvement entre la première et la deuxième position (5, 6), et notamment la première pièce de meuble (3) entourant la ferrure pour meuble (2) d'au moins quatre ou au moins cinq côtés.

14. Composant de meuble (1) selon l'une quelconque des revendications précédentes, au moins la partie de la ferrure pour meuble (2) entraînée électriquement étant protégée par un boîtier (8) en métal ou ignifugé et/ou au moins entouré au moins partiellement, et/ou la première pièce de meuble étant constituée au moins en grande partie de bois, de matière plastique, de matière plastique ignifugée ou de matériaux à base de copeaux de bois.

15. Composant de meuble (1) selon l'une quelconque des revendications précédentes, le moteur (10) fonctionnant à tension continue et ladite tension continue étant inférieure ou égale à 120V ou inférieure ou égale à 75V ou inférieure à 60V,
et/ou au moins cinq bobines (12) sont agencées sur le stator (11) et/ou un espacement maximal (14a) entre deux éléments magnétiques (14) opposés étant supérieur à une largeur (14b) d'un élément magnétique (14) en direction de l'axe de rotation
et/ou au moins un dispositif de protection contre les surcharges étant compris, notamment un capteur détectant une différence de position entre la première et la deuxième pièce de meuble.
